# EUROPÄISCHE PATENTANMELDUNG

(11) **EP 0 651 204 A1**
(43) Veröffentlichungstag der Anmeldung: **03.05.1995**
(21) Anmeldenummer: 94109808.9
(22) Anmeldetag: 24.06.1994
(51) Int. Cl.: F23G 5/08, F23G 5/027, F23L 7/00

(54) **Mehrstufige Hochtemperaturverbrennung von Abfallstoffen mit Inertbestandteilen und Vorrichtung zur Durchführung dieses Verfahrens**

(30) Priorität: 03.11.1993 DE 4337421
(71) Anmelder: Reimer, Hans, Dr., D-22587 Hamburg (DE)
(72) Erfinder: Reimer, Hans, Dr., D-22587 Hamburg (DE)
(74) Vertreter: Richter, Werdermann & Gerbaulet

(57) **Zusammenfassung**

Insbesondere zur Energieeinsparung als auch zur Rauchgasminimierung wird vorgeschlagen, in einer ersten Stufe (11) den Anteil der unterstöchiometrischen Verbrennung der ausgetriebenen flüchtigen Bestandteile (17) auf das Maß zu begrenzen, daß nicht mehr Verbrennungsenergie freigesetzt wird wie für die Trocknung der festen Abfallstoffe und/oder die Vergasung der noch gebundenen flüchtigen Bestandteile dieser Abfallstoffe erforderlich ist und daß die Verbrennung der weitergeleiteten Reststoffe (18) in mindestens einer weiteren Stufe (19) erfolgt.

## Beschreibung

Die Erfindung betrifft eine mehrstufige Hochtemperaturverbrennung von Abfallstoffen mit Inertbestandteilen in mindestens einem geschlossenen Raum mit flüssigem Schlackenabzug.

Die Menge an Industrieabfällen und Hausmüll nimmt jährlich bei ständig abnehmendem Deponieraum zu. Abgesehen davon, daß das Ablagern von Müll ohne gezielte Vorbehandlung wertvollen Deponieraum benötigt, ist ein solches Verfahren auch aus Umweltgesichtspunkten nicht mehr vertretbar. Müllverbrennungsanlagen liefern nur insofern einen denkbaren Weg, wie die verbleibenden Restprodukte, wie Schlacken und Asche, zumindest ein kleineres Volumen benötigen als der unverbrannte Abfall. Nachteilig beim Verbrennen von Müll sind der relativ schlechte thermische Gesamtwirkungsgrad, die hohen Invevestitionskosten sowie die Schadstoffemissionen.

Es ist daher schon vorgeschlagen worden, die Abfallstoffe nach mechanischer Vorbehandlung nahstöchiometrisch einem sogenannten Schwelbrennprozeß zu unterwerfen. Hierbei erfolgt die Trocknung und Entgasung der vorzerkleinerten Abfälle durch eine indirekte Beheizung (Wärmetransport durch eine feste Wand), womit kapazitätseinschränkende Nachteile verbunden sind. Der Ausbrand kann dann nahstöchiometrisch mit Luft als Sauerstoffträger durchgeführt werden und gestattet ebenfalls im Normalfall so hohe Temperaturen, daß die Inertbestandteile schmelzflüssig ausgetragen werden. Beim Schwelbrennverfahren erfolgt allerdings eine energietechnisch gesehen nachteilige Zwischenabkühlung zwischen der ersten Prozeßstufe (Trocknung/Vergasung) und der zweiten Prozeßstufe (Hochtemperaturverbrennung).

Im Gegensatz hierzu steht das sogenannte Thermoselectverfahren, bei dem auf die energie- und verschleißintensive mechanische Vorzerkleinerung verzichtet werden soll, die für Trocknung und Vergasung erforderliche Energie wird jedoch ebenfalls durch eine feste Wand eingetragen. Auch hieraus ergeben sich kapazitätseinengende Nachteile. Das Thermoselectverfahren verzichtet dann jedoch auf eine Zwischenabkühlung der getrockneten und entgasten Abfallstoffe, um in einem mit technischem Sauerstoff vorgeschlagenen Hochtemperaturverbrennungsprozeß einen unterstöchiometrischen Teilausbrand bei flüssigem Schlackenabzug zu gewährleisten. Neben der Notwendigkeit, für einen Betriebseinsatz mit technischem Maßstab auf die Verwendung erprobter Bauelemente verzichten zu müssen, sind mit der Anwendung des Thermoselectverfahrens in umwelttechnischer Hinsicht gravierende Nachteile verbunden. Ein Ausbrand der ausgetriebenen brennbaren, flüchtigen Bestandteile der Abfallstoffe ist prozeßintern nicht vorgesehen. Die nicht ausgebrannten Prozeßgase müssen zur Verhinderung von unzulässigen Schadstoff-Emissionen in die Atmosphäre einer mehrstufigen Reinigung unterzogen werden, bei der erhebliche und hochgiftige Bestandteile in die aufwendig nachzureinigenden "Waschwässer" in Lösung gehen.

Durch die DE 34 444 073 ist ein Verfahren und eine Anlage zum Verbrennen von Abfällen, wie Kommunal- und anderem Müll bekannt, wobei es gilt, die Emission toxischer, organischer Verbindungen im Rauchgas und die Bildung umweltschädlicher Verbrennungsrückstände zu vermeiden. Um dies zu erreichen, wird eine Verbrennung im Drehrohrofen bei Temperaturen oberhalb 1200^{o}C unter Verwendung von Brennluft im Temperaturbereich zwischen 300 und 800^{o}C bei geringem Luftüberschuß und verringerter Rauchgasmenge vorgenommen. Die Wärmeübertragung wird dabei vom heißen Rauchgas auf die Brennluft mit Hilfe eines Wärmeübertragungsfeststoffes vorgenommen, wobei der Feststoff im Kontakt mit Rauchgas aufgeheizt und anschließend im Kontakt mit Luft gekühlt und diese Luft auf Brennlufttemperatur aufgeheizt und der Feuerung des Drehrohrofens zugeleitet wird. Der Feststoff bindet dabei gleichzeitig Schadstoffe im Rauchgas. Mit diesem Verfahren soll es möglich sein, Abfälle von Müll in einem Drehrohrofen in einem Verbrennungsprozeß mit Temperaturen von wenigstens 1200^{o}C bei geringem Luftüberschuß zu beseitigen, wobei organische Verbindungen, insbesondere Dioxine, restlos abgebaut werden sollen. Des weiteren soll eine vollkommene Abgasreinigung von gas- und staubförmigen Schadstoffen und die Erzeugung einer auslaugungsresistenten und deponierungsschädlichen Schlacke geschaffen werden.

Des weiteren ist durch die EP 0 257 018 ein Verfahren zur thermischen Verwertung von Abfällen und/oder Abfallbrennstoffen durch Vergasen und nachfolgende Verbrennung der gebildeten Gase bekannt. Hierbei werden die Abfälle einem mit Gas und/oder Öl direkt beheizten Vergasungsreaktor zugeführt.Einem der Vergasungsreaktoren, welcher bei Temperaturen zwischen 500 und 1200^{o}C betrieben wird, wird ein Teil der Rauchgase aus der nachfolgenden Brennkammer unter Druck rückgeführt. Mit diesem Verfahren soll es möglich sein, auch schwermetallhaltige oder kunststoffhaltige Abfälle thermisch zu verwerten.

Bei dem Verfahren zu Verbrennung von Abfällen nach der DE 40 31 493 wird ein überwiegend aus Sauerstoff bestehendes Oxidationsmittel verwendet, wobei die Verbrennungsgase einen hochtemperaturfesten Filter durchströmen und anschließend gekühlt werden.

Bei keinem dieser bekannten Verfahren erfolgt eine mehrstufige Verbrennung von Abfallstoffen, die Inertbestandteile enthalten. Auch ist keine Möglichkeit gegeben, die Inertbestandteile ohne Zwischenabkühlung und Wiedererwärmung im Schmelzfluß auszutragen.

Es ist Aufgabe der vorliegenden Erfindung, eine mehrstufige Hochtemperaturverbrennung der eingangs genannten Art zu entwickeln, die leicht handhabbar ist und die einen möglichst hohen Wirkungsgrad aufweist.

Diese Aufgabe wird durch das im Anspruch 1 beschriebene Verfahren gelöst, das erfindungsgemäß dadurch gekennzeichnet ist, daß in einer ersten Stufe der Anteil der unterstöchiometrischen Verbrennung der ausgetriebenen flüchtigen Bestandteile auf das Maß begrenzt wird, daß nicht mehr Verbrennungsenergie freigesetzt wird wie für die Trocknung der festen Abfallstoffe und/oder die Vergasung der noch gebundenen flüchtigen Bestandteile dieser Abfallstoffe erforderlich ist und daß die Verbrennung der weitergeleiteten Reststoffe in mindestens einer weiteren Stufe erfolgt. Im Unterschied zum bisher bekannten Stand der Technik wird bewußt in der ersten Verfahrensstufe nur ein teilweiser Ausbrand durchgeführt, wodurch die benötigte Energiemenge in der ersten Stufe erheblich reduziert werden kann. Die unterstöchiometrische Betriebsweise im ersten Verfahrensschritt erzeugt ein brennbares Schwachgas, das zusammen mit den von den flüchtigen Bestandteilen befreiten Abfallstoffen in den zweiten Verfahrensschritt transportiert wird, wo ein vollständiges Verbrennen bei hohen Temperaturen erfolgt. Da in der ersten Stufe keine vollständige Verbrennung erwünscht ist, kann auch auf technischen Sauertoff zurückgegriffen werden. Das Verfahren ist in einem oder in mehreren geschlossenen Räumen durchführbar und ermöglicht die mehrstufige Verbrennung von Abfallstoffen mit Inertbestandteilen und deren Austrag ohne Zwischenkühlung und Wiedererwärmung im Schmelzufluß.

Weiterentwicklungen des Verfahrens sind in den Ansprüchen 2 bis 8 beschrieben.

So besteht das in die erste Stufe zugeführte Heizgas, vorzugsweise aus rezirkuliertem Rauchgas mit geregelter Zumischung, aus reinem Sauerstoff. Insbesondere kann das Rauchgas, der Abgasstrom oder Abgasteilstrom der zweiten Stufe mit den betreffenden Energiegehalten rezirkulierend in die erste Stufe zurückgeführt werden. Diesem Abgasstrom ist nur so viel Sauerstoff zuzusetzen, wie für die gewünschte unterstöchiometrische Verbrennung benötigt wird.

Vorzugsweise wird die Verbrennung derart durchgeführt, daß das in der ersten Stufe entstehende brennbare Gas selbständig die unverbrennten oder teilverbrannten festen Brennstoffkomponenten in die zweite Stufe transportiert. Hierdurch lassen sich aufwendige Fördermittel einsparen. Die Verbrennungstemperaturen der ersten Stufe kann auf 500 K bis 700 K begrenzt werden, das ist die Temperatur, daß zum Austreiben der flüchtigen Bestandteile und zur Trocknung der Abfallstoffe erforderlich ist. Die Verbrennungstemperatur der zweiten Stufe liegt vorzugsweise bei 1200 K bis 1400 K in Abhängigkeit vom Schwelverhalten der Inertbestandteile der Abfallstoffe, wobei es sich bei den Inertbestandteilen im wesentlichen um unverbrennbare mineralische Bestandteile der Abfälle handelt.

Gegebenenfalls, insbesondere bei stark feuchthaltigen Abfallprodukten, empfiehlt sich eine Vortrocknung der Abfallstoffe vor ihrer Eingabe in die beschriebene erste Stufe.

Vorzugsweise wird der Prozeß so geführt, daß die Inertbestandteile aus der zweiten Stufe im Schmelzfluß ausgetragen werden. Die aus der Rauchgaskühlung gewonnene Energie wird unmittelbar zur Dampferzeugung oder zur sonstigen Energieverwertung verwendet, so daß mit Ausnahme des Anfahrens die gesamte Verbrennung ohne Fremdenergie durchführbar ist.

Zur Durchführung der beschriebenen mehrstufigen Verbrennung wird eine Vorrichtung verwendet, bei der ein erster Verbrennungsofen über einen Austrag mit einem zweiten Verbrennungsofen verbunden ist und bei dem die Abgasleitung des zweiten Verbrennungsofens eine Rückführleitung für einen Teilrauchgasstrom besitzt, in die eine Sauerstoffleitung mit einem Gasventil mündet. Durch diese Apparatur kann der Sauerstoffgehalt in der ersten Stufe auf das gewünschte unterstöchiometrische Maß geregelt werden.

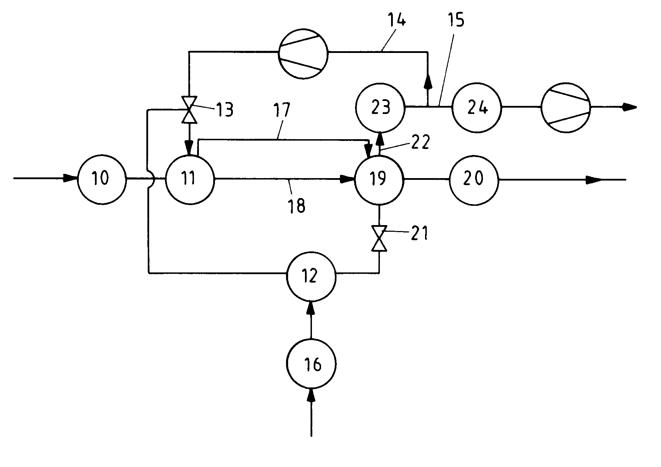

Weiterbildungen der Erfindung sind in der Zeichnung dargestellt, die ein Blockdiagramm der mehrstufigen Verbrennung zeigt.

In eine Aufgabestation 10 werden die festen Abfallstoffe eingegeben, die der ersten Verfahrensstufe 11 zugeleitet werden, wo eine Trocknung, Entgasung und unterstöchiometrische Teilverbrennung bei 500 bis 700 K stattfindet. Das dort zur Teilverbrennung benötigte Gas besteht aus einem Gemisch von rezirkuliertem Abgas und technischem Sauerstoff, der einem O₂-Sauerstoffbehälter 12 entnommen und über ein Ventil 13 einem Abgasstrom zugemischt wird, der als rezirkulierter Abgasteilstrom 14 der Abgasleitung 15 der zweiten Stufe entnommen wird. Gegebenenfalls kann auch eine Vorrichtung 16 zur Sauerstoffgewinnung vorgesehen sein, die dem O₂-Gas-Druckbehälter 12 den Sauerstoff zuführt.

Das in der ersten Verfahrensstufe entstehende Gas 17 wird zusammen mit der getrockneten, unvollständig verbrannten Brennstoffkomponente 18 der zweiten Stufe 19 zugeführt, wobei die nachstöchiometrische Hochtemperaturverbrennung mit schmelzflüssigem Austrag 20 der Inertbestandteile stattfindet. Die Sauerstoffzufuhr wird über ein Ventil 21 geregelt. Das die zweite Verbrennungsstufe 19 verlassende Gas 22 wird in einer Rauchgaskühlung 23 auf niedrigere Temperaturen gebracht, wobei die dort gewonnene Energie als Prozeßwärme der Verbrennung wieder zugeführt wird. Ferner befindet sich im Abgasstrom noch eine Rauchgasreinigung 24, gegebenenfalls mit einem Katalysator.

Der Vorteil der erfindungsgemäßen Entwicklung gegenüber dem Stand der Technik besteht darin, daß eine mechanische Aufbereitung der Abfallstoffe, etwa wie bei dem Schwel-Brenn-Verfahrenn, nicht erforderlich ist. Stattdessen können in der ersten Stufe 11 Rost- oder Drehrohrverbrennungen bekannter Bauart verwendet werden. Die Verwendung von technischem Sauerstoff für die Verbrennung ermöglicht bei den üblicherweise zu erwartenden Heizwerten der aufgegebenen festen Abfallstoffe einen Hochtemperaturbetrieb mit schmelzflüssigem Austrag der Inertbestandteile ohne Zusatzbrennstoff. Zusätzlicher Brennstoff ist lediglich für das Anfahren aus dem kalten Zustand und bei Heizwerten unter ca. 5000 kJ/kg erforderlich. Das Verfahren kommt mit einer einfach handhabbaren Vorrichtung aus und kann im stationären Betrieb ohne Fremdenergie geführt werden, wenn man von dem zusätzlichen Energiebedarf für die Gewinnung des technischen Sauerstoffs absieht. Die freigesetzte Energie einschließlich des fixen Kohlenstoffgehaltes in den festen Abfallstoffen kann in üblicher Weise und in dafür nach dem Stand der Technik bekannten Apparaten in nutzbare Formen umgewandelt werden. Die entstehenden Abgasvolumenmengen sind wesentlich geringer, was auch im Hinblick auf die Kessel- und Rauchgasreinigungsanlagen eine wirtschaftlichere Betriebsweise ermöglicht. Die Abgasmengen betragen bei der erfindungsgemäßen Verfahrensführung nur etwa 10% bis 20% der üblicherweise zu erwartenden Abgasmengen. Durch den vollständigen Abbrannt entstehen auch bei der Abgasreinigung keine mit organischen Verunreinigungen belastete Waschflüssigkeiten.

## Patentansprüche

1. Mehrstufige Hochtemperaturverbrennung von Abfallstoffen mit Inertbestandteilen in mindestens einem geschlossenen Raum mit flüssigem Schlackenabzug, dadurch gekennzeichnet, daß in einer ersten Stufe mit unterstöchiometrischer Verbrennung der Anteil der ausgetriebenen flüchtigen Bestandteile auf das Maß begrenzt wird, so daß nur die Verbrennungsenergie freigesetzt wird , wie für die Trocknung der festen Abfallstoffe und/oder die Vergasung der noch gebundenen flüchtigen Bestandteile dieser Abfallstoffe erforderlich ist und daß die Verbrennung der weitergeleiteten Reststoffe in mindestens einer weiteren Stufe erfolgt.

2. Hochtemperaturverbrennung nach Anspruch 1, dadurch gekennzeichnet, daß der in die erste Stufe zugeführte Sauerstoff aus rezirkuliertem Rauchgas mit geregelter Zumischung aus reinem Sauerstoff besteht.

3. Hochtemperaturverbrennung nach Anspruch 1 oder 2, dadurch gekennzeichnet, daß das in der ersten Stufe entstehende brennbare Gas selbständig die unverbrannten oder teilverbrannten festen Brennstoffkomponenten in die zweite Stufe transportiert.

4. Hochtemperaturverbrennung nach einem der Ansprüche 1 bis 3, dadurch gekennzeichnet, daß die Verbrennungstemperatur der ersten Stufe bei 500 bis 700 K liegt.

5. Hochtemperaturverbrennung nach einem der Ansprüche 1 bis 4, dadurch gekennzeichnet, daß die Verbrennungstemperatur der zweiten Stufe bei 1200 bis 1400 K liegt.

6. Hochtemperaturverbrennung nach einem der Ansprüche 1 bis 5, dadurch gekennzeichnet, daß die Abfallstoffe vor ihrer Eingabe in die erste Stufe getrocknet werden.

7. Hochtemperaturverbrennung nach einem der Ansprüche 1 bis 6, dadurch gekennzeichnet, daß die Inertbestandteile aus der zweiten Stufe im Schmelzfluß ausgetragen werden.

8. Hochtemperaturverbrennung nach einem der Ansprüche 1 bis 7, dadurch gekennzeichnet, daß die aus der Rauchgaskühlung gewonnene Energie zur Dampferzeugung verwendet wird, so daß mit Ausnahme des Anfahrens die Verbrennung ohne Fremdenergie durchgeführt wird.

9. Vorrichtung zur Durchführung einer mehrstufigen Hochtemperaturverbrennung nach einem der Ansprüche 1 bis 8, dadurch gekennzeichnet, daß ein erster Verbrennungsofen (11) als erste Stufe über einen Austrag (18,17) mit einem zweiten Verbrennungsofen (19) als zweite Stufe verbunden ist und daß die Abgasleitung (15) des zweiten Verbrennungsofens (19) eine Rückführleitung (14) für einen Teilrauchgasstrom besitzt, in die eine Sauerstoffleitung mit einem Gasventil (13) mündet.
